# EUROPÄISCHE PATENTANMELDUNG

(11) **EP 0 930 470 A2**
(43) Veröffentlichungstag der Anmeldung: **21.07.1999**
(21) Anmeldenummer: 99100660.2
(22) Anmeldetag: 14.01.1999
(51) Int. Cl.: F24D 3/14

(54) **Heizungsanlage mit mindestens einem Heizelement zur Raumheizung**

(30) Priorität: 15.01.1998 DE 19801165; 06.05.1998 DE 29808088 U
(71) Anmelder: Kälberer, Stefan, 73326 Deggingen (DE)
(72) Erfinder: Kälberer, Stefan, 73326 Deggingen (DE)
(74) Vertreter: Grosse, Rainer, Dipl.-Ing.

(57) **Zusammenfassung**

Es wird eine Heizungsanlage mit mindestens einem Heizelement zur Raumheizung, das in mindestens einer Wand, in der Decke und/oder im Boden des Raumes angeordnet ist, vorgeschlagen. Die Heizungsanlage zeichnet sich insbesondere dadurch aus, daß das Heizelement (3,103,103',103'') ein von einem Wärmeträgermedium durchströmbares Heizungsrohr (7) und ein tafelförmiges Wärmeleitelement (5,105,105', 105'') umfaßt und daß das Heizungsrohr (7) wärmeleitend mit dem Wärmeleitelement verbunden ist.

## Beschreibung

Die Erfindung betrifft eine Heizungsanlage mit mindestens einem Heizelement zur Raumheizung.

Es ist bekannt, zur Beheizung eines Raumes Konvektionsheizkörper einzusetzen, die innerhalb des Raumes im Bereich der Außenwand angeordnet sind. Bei einem Konvektionsheizkörper wird die Wärmeenergie durch Lufterhitzung und Luftumwälzung in den Raum eingebracht. Die Raumluft dient hierbei als Wärmeträgermedium. Es hat sich gezeigt, daß die durch Konvektion in den Raum eingebrachte Wärme nicht immer als angenehm empfunden wird. überdies ist der vom Heizkörper benötigte Raum relativ groß.

Es ist weiterhin eine Heizungsanlage bekannt, mittels derer die Wärmeenergie zum großen Teil mittels Strahlungswärme in den Raum eingebracht wird. Die Heizungsanlage umfaßt in den Fußboden, beispielsweise in Estrich eingebettete Rohrleitungen, die Teil eines Rohrleitungssystems sind, durch das ein Wärmeträgermedium, beispielsweise Heizwasser, geleitet wird. Die Fußbodenheizung hat lange Aufheizzeiten und reagiert träge auf Temperaturschwankungen innerhalb des Raumes. Außerdem ist die Vorlauftemperatur, also die Temperatur, mit der das Wärmeträgermedium in die im Fußboden verlegte Rohrleitung geführt wird, nur in geringen Bereichen variierbar und darf eine bestimmte Zulauftemperatur nicht überschreiten, da ansonsten Wärmespannungen entstehen, die zu Rissen im Estrich oder dem darunterliegenden Betonsockel führen. Ein auf dem Estrich befestigter Fußbodenbelag, beispielsweise Fliesen, kann dadurch beschädigt werden. Es ist ferner bekannt, eine derartige Heizungsanlage in einer Wand des Raumes einzubetten, wobei auch hier die gleiche Nachteile wie bei einer Fußbodenheizung auftreten. Ferner hat sich gezeigt, daß aufgrund der schlangenlinienförmigen Verlegung der Rohrleitung die Höhe der Heizleistung begrenzt ist. Ein Grund dafür ist, daß die Wärmeübertragung von der Rohrleitung an die Wand beziehungsweise an den Fußboden aufgrund des geringen Abstands, den die einzelnen, nebeneinander angeordneten Rohrleitungsabschnitte voneinander haben, begrenzt ist.

Es ist daher Aufgabe der Erfindung, eine Heizungsanlage zu schaffen, mit der auch hohe Heizleistungen und vorzugsweise auch hohe Vorlauftemperaturen des Wärmeträgermediums realisierbar sind.

Zur Lösung dieser Aufgabe wird eine Heizungsanlage mit den Merkmalen des Anspruchs 1 vorgeschlagen. Diese zeichnet sich insbesondere dadurch aus, daß das in mindestens eine Wand, in die Decke und/oder im Boden integrierte Heizelement ein von einem Wärmeträgermedium durchströmbares Heizungsrohr und ein tafelförmiges Wärmeleitelement umfaßt und daß das Heizungsrohr wärmeleitend mit dem Wärmeleitelement verbunden ist. Dadurch, daß die Wärmeenergie vom Wärmeträgermedium, vorzugsweise Wasser oder Dampf, zunächst an das Heizungsrohr und von diesem an das Wärmeleitelement übertragen wird, können auch hohe Vorlauftemperaturen des Wärmeträgermediums realisiert werden, ohne daß dabei die Wände, der Fußboden, insbesondere dessen Belag, oder die Decke des zu beheizenden Raumes beschädigt werden. Im Zusammenhang mit der hier vorliegenden Erfindung wird unter dem Begriff "tafelförmiges" Wärmeleitelement ein im wesentlichen ebenes Flächenelement verstanden, das im Vergleich zu seiner Breite und/oder Höhe eine nur sehr geringe Dicke aufweist. Das ebene Flächenelement kann selbstverständlich Sicken, Bohrungen und dergleichen aufweisen oder zum Beispiel in seinen Randbereichen abgekantet sein. Wichtig ist, daß mit Hilfe des Wärmeleitelements ein gewünschter Wärmetransport vom Wärmeträgermedium zum zu beheizenden Bauteil (Wand/Decke/Boden) gewährleistet werden kann. Die zum Wärmetransport vom Wärmeträgermedium zum Bauteil nutzbare Fläche des Heizungsrohrs ist wesentlich kleiner als die Fläche des tafelförmigen Wärmeleitelements.

Mit Hilfe des beispielsweise von einem Wärmeleitblech gebildeten Wärmeleitelements, das vorzugsweise wärmeleitend mit dem zu erwärmenden Bauteil verbunden ist, insbesondere flächig auf der dem Raum abgewandten Seite des zu erwärmenden Bauteils anliegt, oder in dieses integriert ist, also zum Beispiel zumindest teilweise in das Bauteil eingegossen, gemauert oder dergleichen, ist eine partielle Erwärmung der Wand, der Decke und/oder des Bodens realisierbar. Nach einer besonders vorteilhaften Weiterbildung ist das Heizelement von dem zu erwärmenden Bauteil mechanisch soweit entkoppelt, daß das auch sehr hohe Vorlauftemperaturen des Wärmeträgermediums realisierbar sind, die bis zu 90°C und darüber betragen können, ohne daß dabei Risse in der Wand/Decke und/oder dem Boden auftreten. Aufgrund dieser Ausgestaltung ist mit der erfindungsgemäßen Heizungsanlage eine höhere Wärmeleistung erzielbar als mit herkömmlichen Heizungsanlagen.

Nach einer Weiterbildung der Erfindung ist vorgesehen, daß der Abstand zwischen einem am Wärmeleitelement anliegenden ersten Heizungsrohrabschnitt und mindestens einem Seitenrand des Wärmeleitelements und/oder der Abstand zwischen dem ersten Heizungsrohrabschnitt und mindestens einem am Wärmeleitelement anliegenden zweiten Heizungsrohrabschnitt wesentlich größer als der Durchmesser des Heizungsrohrsabschnitts sind/ist. Aufgrund dieser Ausgestaltung ist eine hohe Wärmeleistung realisierbar, da bei zwei benachbarten Heizungsrohrabschnitten diese sich beim Abführen beziehungsweise Übertragen der Wärmeenergie an das Wärmeleitelement nicht gegenseitig behindern. Die Größe des einem Heizungsrohrabschnitt zugeordneten Flächenanteils am Wärmeleitelement ist vorzugsweise so gewählt, daß in kurzer Zeit eine große Energiemenge an das Wärmeleitelement übertragen werden kann. Die Querschnittsform des mindestens einen Heizungsrohrabschnitts ist praktisch beliebig und kann beispielsweise rechteckig, insbesondere viereckig, oder rund sein.

Bei einer vorteilhaften Ausführungsform der Heizungsanlage liegt der Abstand zwischen dem ersten und zweiten Heizungsrohrabschnitt des Heizelements und/oder der Abstand zwischen zwei nebeneinander angeordneten Heizungsrohrabschnitt zweier Heizelemente in einem Bereich von 30 mm bis 600 mm, vorzugsweise von 100 mm bis 400 mm, insbesondere von 150 mm bis 250 mm. Der Abstand eines Heizungsrohrabschnitts zu einem Seitenrand des Wärmeleitelements beträgt bei einer vorteilhaften Ausführungsvariante in etwa die Hälfte des Abstandes zwischen zwei Heizungsrohrabschnitten. Dieser Abstand liegt nach einer Weiterbildung der Erfindung in einem Bereich von 20 mm bis 300 mm, vorzugsweise von 40 mm bis 150 mm, insbesondere von 80 mm bis 120 .

Außerdem wird ein Ausführungsbeispiel der Heizungsanlage bevorzugt, bei dem das Verhältnis zwischen dem Durchmesser des Heizungsrohrs und dem Abstand des mindestens einen, wärmeleitend mit dem Wärmeleitelement verbundenen Heizungsrohrabschnitt mit einem Seitenrand des Wärmeleitelements in einem Bereich von 1:2 bis 1:30, vorzugsweise von 1:4 bis 1:13, insbesondere von 1:6 bis 1:10 liegt. Bei einer weiteren Ausführungsform ist vorgesehen, daß das Verhältnis zwischen dem Durchmesser des Heizungsrohrs und dem Abstand eines ersten Heizungsrohrsabschnitts zu einem zweiten Heizungsrohrabschnitt des gleichen Heizungsrohrs und/oder dem benachbart angeordneten Heizungsrohrabschnitts eines Heizungsrohrs eines zweiten Heizelements in einem Bereich von 1:3 bis 1:50, vorzugsweise von 1:8 bis 1:33, insbesondere von 1:13 bis 1:20. Bei einem Ausführungsbeispiel der Heizungsanlage beträgt der Durchmesser des Heizungsrohrs 12 mm. Selbstverständlich sind auch größere oder kleinere Rohrdurchmesser realisierbar. Die Maße des Wärmeleitelements können daran angepaßt sein.

Bei einem weiteren vorteilhaften Ausführungsbeispiel der Heizungsanlage ist vorgesehen, daß mindestens zwei in einem Abstand voneinander angeordnete Heizelemente vorgesehen sind, die jeweils mit einem Heizungsrohr wärmeleitend verbunden sind, und daß der Abstand zwischen den benachbarten Heizungsrohrabschnitten der Heizrohre wesentlich größer als der Durchmesser des Heizungsrohrsabschnitts ist. Allen Ausführungsbeispielen des Heizelements ist gemeinsam, daß der jeweilige Heizungsrohrabschnitt so am Wärmeleitelement angeordnet ist, daß um ihn herum genügend Platz ist, um eine gewünschte, vom Wärmeträgermedium zugeführte Wärmeenergiemenge an das Wärmeleitelement abzuführen beziehungsweise weiter zu transportieren.

Bevorzugt wird auch ein Ausführungsbeispiel der Heizungsanlage, das sich dadurch auszeichnet, daß das Heizungsrohr mindestens einen Bogen aufweist oder als Heizrohrschlange ausgebildet ist. Das Heizungsrohr weist also entweder lediglich einen Bogen auf, so daß es zum Beispiel im wesentlichen U-förmig ausgebildet ist oder besteht aus mehreren miteinander verbundenen Bögen, wodurch die Heizrohrschlange gebildet ist. Diese besteht also aus einem schlangenlinienförmig gebogenen, geformten oder auf sonstiges Weise hergestellten Heizungsrohr. Allen Ausführungsvarianten des Heizungsrohrs ist gemeinsam, daß dieses vorzugsweise im wesentlichen vom Wärmeleitelement überdeckt ist. Bei einer Ausführungsvariante ist vorgesehen, daß der mindestens eine Bogen des Heizungsrohrs nicht vom Wärmeleitelement abgedeckt ist, sondern über dieses hinausragt. Aufgrund dieser Ausgestaltung sind vorzugsweise nur die geraden Heizungsrohrabschnitte wärmeleitend am Wärmeleitelement angebracht.

Allen Ausführungsbeispielen der Heizungsanlage ist gemeinsam, daß das mindestens Heizelement innerhalb mindestens einer Wand, der Decke und/oder des Bodens des zu beheizenden Raumes angeordnet, beispielsweise federnd an dieses Bauteil angedrückt ist. Das Heizelement ist also in einem Hohlraum angeordnet und wird an die Rückseite der zu beheizenden Bauteils (Wand-/Boden-/Deckenfläche) angedrückt und dadurch wärmeleitend an diesem angebracht. Dadurch wird eine gute Wärmeübertragung vom Heizelement zur beheizenden Fläche hin sichergestellt. Die vom Heizelement dieser Fläche zugeführte Wärmeenergie wird verlustarm in Strahlungswärme umgewandelt und in den Raum abgestrahlt. Da die Wärmeenergie durch Strahlung übertragen wird, enthält die Raumluft nur wenig Schwebe- und Staubpartikel, da die Luft nicht umgewälzt wird, wie zum Beispiel bei einer Konvektionsheizung, und damit die Schwebe- und Staubpartikel nicht aufgewirbelt werden. Besonders vorteilhaft bei dem elastischen Andrücken des Heizungselements ist ferner, daß dieses von dem zu beheizenden Bauteil (Wand/Decke/Fußboden) mechanisch entkoppelt ist. Daher können die Vorlauftemperaturen des dem Heizelement die Wärme zuführenden Wärmeträgermediums in einem großen Bereich variiert werden. Die Wärmeausdehnung des Heizelements wird hierbei nicht auf das Bauteil übertragen, sondern wird durch die elastische Lagerung des Heizelements kompensiert. Dadurch kann eine Rißbildung in der Teilwand sicher verhindert werden.

Schließlich wird ein Ausführungsbeispiel der Heizungsanlage bevorzugt, bei dem das Wärmeleitelement einstückig ausgebildet ist und/oder aus einem nicht magnetischen beziehungsweise nicht magnetisierbaren Material besteht, das zudem eine gute Wärmeleitfähigkeit aufweist, wie zum Beispiel Kupfer oder Messing oder Aluminium. Alternativ ist es möglich, daß das Wärmeleitelement aus verzinktem Stahlblech oder dergleichen besteht. Wichtig ist, daß das Wärmeleitelement eine relativ gute Wärmeleitfähigkeit aufweist und vorzugsweise alterungsbeständig sowie kostengünstig ist.

Nach einer vorteilhaften Weiterbildung der Erfindung ist vorgesehen, daß die Heizungsanlage mindestens zwei Heizelemente umfaßt, die in einem Abstand voneinander innerhalb des zu erwärmenden Bauteils angeordnet sind. Der Abstand zwischen den beiden Heizelementen ist so groß, daß sich die von dem jeweiligen Heizelement erwärmte Wand-/Decken- und/oder Bodenfläche(n) vorzugsweise nicht oder nur zu einem geringen Teil überschneiden. Jedes der Heizelemente erwärmt also im wesentlichen nur die das Heizelement umgebende -je nach Anordnung des Heizelements- Wand-/Decken und/oder Bodenfläche. Da der Wärmefluß vom Heizelement zu der mit diesem zusammenwirkenden Bauteilfläche vom jeweils benachbart angeordneten Heizelement aufgrund des großen Abstands nicht beziehungsweise nur zu einem geringen Teil beeinflußt wird, ist eine hohe Leistungsabgabe möglich. Mit jedem der Heizelemente ist also eine partielle Erwärmung der mindestens einen Wand, der Decke und/oder dem Boden möglich. Je kleiner der Abstand zwischen den Heizelementen gewählt wird, desto größer kann der Teil/Überschneidungsbereich werden und um so kleiner wird die maximal mögliche Leistungsabgabe der Heizelemente. Unter dem Begriff "Überschneidungsbereich" wird der Flächenbereich des Bauteils verstanden, der gegebenenfalls auch nur von einem der beiden Heizelementen mit der gewünschten Wärmemenge versorgt werden kann. Der Überschneidungsbereich ist also auch der Bereich, in dem die Wärmeströme der Heizelemente aufeinander treffen und sich beim Weiterfließen gegenseitig behindern, wodurch sich die Leistungsabgabe der Heizelemente verringert.

Bei einem weiteren Ausführungsbeispiel der Heizungsanlage ist vorgesehen, daß die Größe und/oder die Anordnung des mindestens einen Heizelements innerhalb der Wand, der Decke und/oder des Bodens so gewählt ist, daß eine maximale oder im wesentlichen maximale Leistungsabgabe des Heizelements realisierbar ist. Hierdurch kann eine Heizanlage mit einer hohen Heizleistung realisiert werden.

Des weiteren ist nach einer Ausführungsvariante vorgesehen, daß die mit dem Heizelement erwärmbare Wand-, Decken- und/oder Bodenfläche größer, insbesondere wesentlich größer, ist als die wärmeleitend mit der Wand-/Decken- und/oder Bodenfläche verbundene Fläche des Wärmeleitelements.

Besonders vorteilhaft bei allen Ausführungsbeispielen der Heizungsanlage ist, daß eine partielle Erwärmung mindestens einer Wand, der Decke und/oder dem Boden mit dem mindestens einen Heizelement möglich ist. Das Heizelement muß also -anders wie bei den eingangs beschriebenen Heizungsanlagen- baulich nicht über die gesamte zu erwärmende Fläche erstrecken, sondern lediglich über einen Teilbereich. Festzuhalten bleibt noch, daß das zu erwärmende Bauteil (Wand/Decke/Boden) die Sekundärheizfläche bildet, während das Heizelement an sich die Primärheizfläche ist.

Weitere vorteilhafte Ausführungsformen der Heizungsanlage ergeben sich aus den übrigen Unteranspüchen.

Die Erfindung wird im folgenden anhand der Zeichnung näher erläutert. Dabei zeigen:
- Figur 1: eine Draufsicht auf ein erstes Ausführungsbeispiel eines Heizelements;
- Figur 2: eine Seitenansicht des Heizelements gemäß Figur 1;
- Figur 3: eine perspektivische Darstellung von zwei Teilen eines Ausführungsbeispiels einer Haltevorrichtung;
- Figur 4: eine Explosionsdarstellung weiterer Teile der Haltevorrichtung;
- Figur 5: eine schematische Vorderansicht der Haltevorrichtung im zusammengebauten Zustand;
- Figur 6: eine schematische Draufsicht auf einen Längsschnitt einer Ständerhohlwand mit montierter Haltevorrichtung;
- Figur 7: eine schematische Draufsicht auf den Längsschnitt der Ständerhohlwand mit montiertem Heizelement;
- Figur 8: eine Seitenansicht eines weiteren Ausführungsbeispiels des Heizelements;
- Figuren 9 und 10: weitere Ausführungsbeispiele einer Ständerhohlwand in Draufsicht;
- Figur 11: eine perspektifische Darstellung eines Teils eines weiteren Ausführungsbeispiels des Heizelements;
- Figur 12: einen Querschnitt durch das Heizelement gemäß Figur 11;
- Figuren 13 und 14: jeweils eine Draufsicht und ein Seitenansicht weiterer Ausführungsbeispiele des Heizelements und
- Figur 15: einen Ausschnitt eins Raums mit installierten Heizelementen.

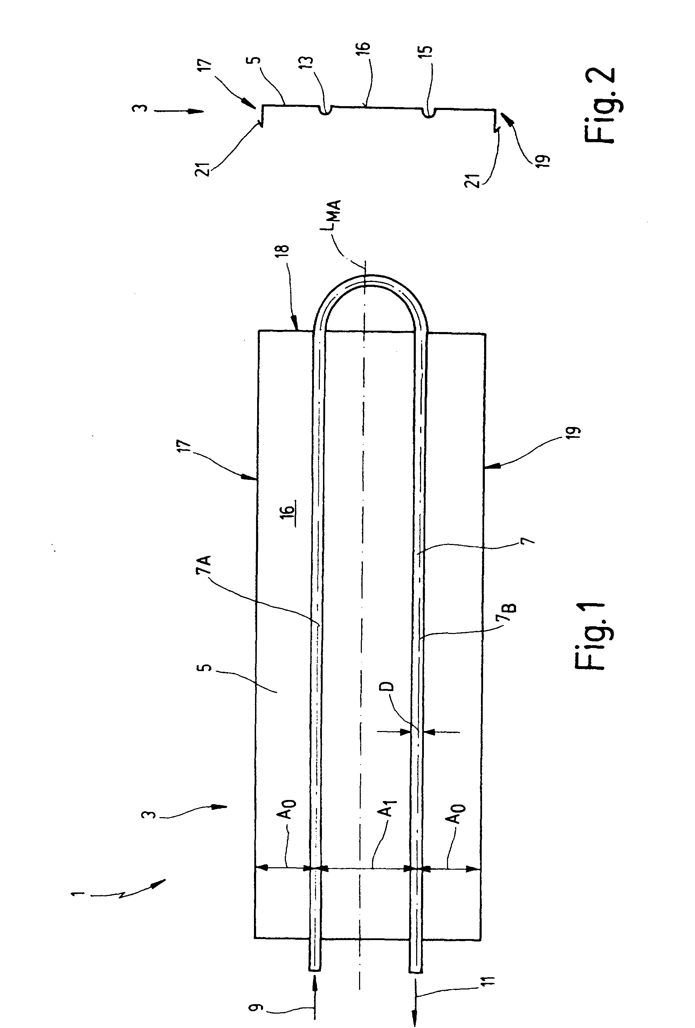

Figur 1 zeigt schematisch eine Draufsicht auf einen Teil einer der Beheizung eines oder mehrerer Räume dienenden Heizungsanlage 1, nämlich ein Ausführungsbeispiel eines auch als Heizkörper bezeichneten Heizelements 3. Dieses wird von einem vorzugsweise aus verzinktem Stahlblech oder aus Messing oder aus Aluminium bestehenden, die Form einer Tafel aufweisenden Wärmeleitelement 5 und einem daran angebrachten, vorzugsweise aus Kunststoff oder Kupfer oder Aluminium bestehenden Heizungsrohr 7 gebildet. Das Heizungsrohr ist von einem Wärmeträgermedium, beispielsweise erwärmtes beziehungsweise heißes Wasser oder Dampf, durchströmbar. Wie mit Pfeilen 9 und 11 angedeutet, wird das Heizungsrohr 7 mit dem Vorlauf und dem Rücklauf des nicht näher dargestellten Rohrnetzes der Heizungsanlage 1 verbunden. Das Wärmeleitelement 5 weist bei diesem Ausführungsbeispiel eine rechteckige Grundform auf. Das Wärmeleitelement kann bei einem anderen Ausführungsbeispiel auch eine andere Form aufweisen, zum Beispiel quadratisch, oval oder rund. Unabhängig von der Form weist das Wärmeleitelement bei allen Ausführungsbeispielen eine im Vergleich zum Durchmesser des Heizungsrohres nur sehr geringe Dicke auf.

Im folgenden wird rein beispielhaft davon ausgegangen, daß es sich hier bei der Heizungsanlage 1 um eine an sich bekannte Warmwasserheizung handelt, so daß deren Aufbau nicht weiter beschrieben wird.

Figur 2 zeigt eine Seitenansicht des vorzugsweise einteiligen Wärmeleitelements 5 des Heizelements 3, das hier zwei gerade, sich über die gesamte Länge des Wärmeleitelements 5 erstreckende Sicken 13 und 15 aufweist, die bei diesem Ausführungsbeispiel einen im wesentlichen U-förmigen beziehungsweise teilkreisförmigen Querschnitt aufweisen. In die zueinander in einem Abstand angeordneten Sicken 13, 15 wird das in Figur 2 nicht dargestellte U-förmig gebogene Heizungsrohr 7 derart eingeklipst, daß der Bogen des Heizungsrohrs 7 -wie in Figur 1 dargestellt- das Wärmeleitelement 5 überragt und daher nicht an diesem anliegt. Durch das Einklipsen des Heizungsrohrs 7 beziehungsweise der beiden geraden Heizungsrohrabschnitte 7A und 7B in die Sicken 13, 15 wird dieses an dem Wärmeleitelement 5 sicher, vorzugsweise rutschfest gehalten, so daß auf weitere Befestigungsmittel verzichtet werden kann. Die Anordnung und der Verlauf der Sicken 13, 15 ist an die Form des Heizungsrohrs 7 angepaßt, das heißt, wenn das Heizungsrohr 7, wie bei einem weiteren -nicht dargestellten- Ausführungsbeispiel vorgesehen, mehrere Biegungen aufweist (Heizrohrschlange), weisen die Sicken einen entsprechenden Verlauf auf. Die Sicken 13, 15 sind vorzugsweise derart tief, daß das darin eingedrückte/eingeklipste Heizungsrohr 7 vollständig aufgenommen wird, also nicht über eine Anlagefläche 16 des Wärmeleitelements 5, mit der dieses an einer zu beheizenden, nicht dargestellten Teilwand einer Ständerhohlwand anliegt, überragt beziehungsweise nicht über diese vorsteht.

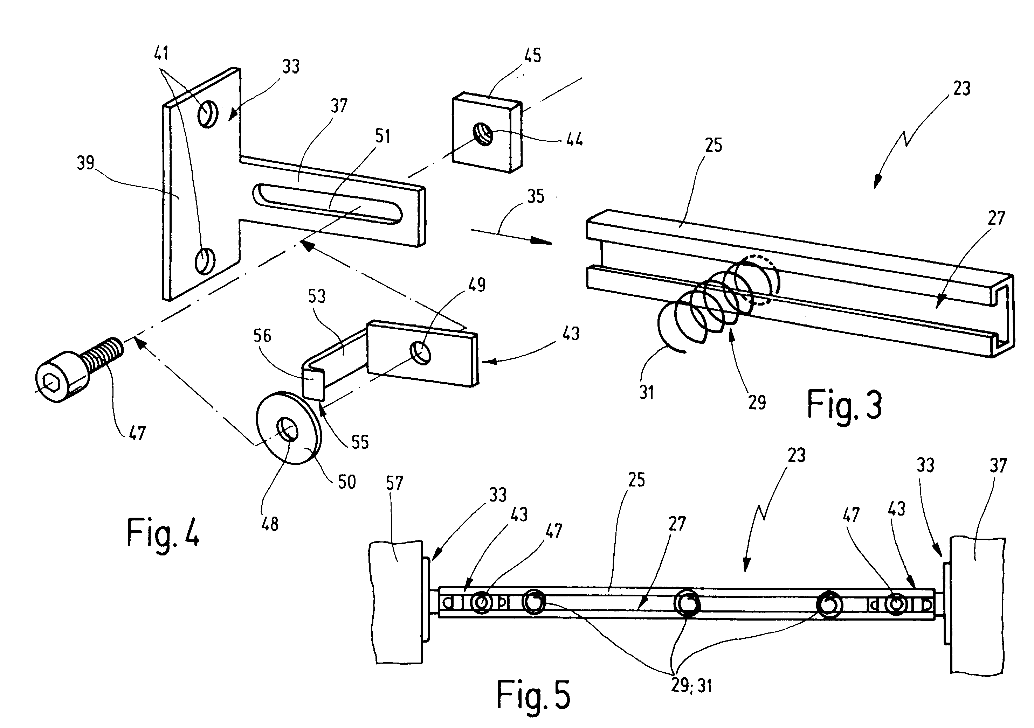

Das beispielsweise eine Dicke von 0,6 mm aufweisende tafelförmige Wärmeleitelement 5 ist an seinen längsseitigen Randbereichen 17 und 19 abgewinkelt und weist jeweils ein schrägstehendes, die Form eines Hakens aufweisendes Ende 21 auf, auf deren Funktion anhand von Figur 4 noch näher eingegangen wird.

Aus Figur 1 ist ersichtlich, daß die beiden geraden Heizungsrohrabschnitte 7A und 7B parallel zueinander verlaufen. Der Abstand A₁ zwischen dem ersten geraden Heizungsrohrabschnitt 7A und dem zweiten geraden Heizungsrohrabschnitt 7B ist bei diesem Ausführungsbeispiel im wesentlichen konstant. Der erste Heizungsrohrabschnitt 7A ist in einem Abstand A₀ zu dem gemäß der Darstellung gemäß Figur 1 oberhalb der Längsmittelachse L_{MA} des Wärmeleitelements 5 liegenden Seitenrand der Längsseite des Wärmeleitelements 5 angeordnet. Der zweite Heizungsrohrabschnitt 7B ist bei dem in Figur 1 dargestellten Ausführungsbeispiel ebenfalls in einem Abstand A₀ zu dem in der Darstellung gemäß Figur 1 unterhalb der Längsmittelachse L_{MA} liegenden Seitenrand der anderen Längsseite des Wärmeleitelements 5 angeordnet. Der Abstand A₀ ist bei diesem Ausführungsbeispiel aufgrund der Parallelität der Längsseiten des Wärmeleitelements und der der geraden Heizungsrohrabschnitte 7A, 7B in Längsrichtung des Wärmeleitelements im wesentlichen konstant. Des weiteren ist der Abstand A₀ größer als die Hälfte des Abstands A₁.

Die Abstände A₀, A₁ sind wesentlich größer als der Durchmesser D der Heizungsrohrabschnitte 7A, 7B beziehungsweise des Heizungsrohrs 7, der bei einer vorteilhaften Ausführungsvariante circa 12 mm beträgt. In diesem Zusammenhang wird darauf hingewiesen, daß das Heizungsrohr 7 einen runden, insbesondere kreisrunden, rechteckigen, auch quadratischen, oder ovalen Querschnitt aufweisen kann. Die Querschnittsform ist grundsätzlich beliebig. Wenn das Heizungsrohr 7 einen von der runden Querschnittsform abweichende Querschnittsform aufweist, wird im Zusammenhang mit der vorliegenden Erfindung unter dem Durchmesser D die im montierten Zustand des Heizungsrohrs quer zur Längserstreckung des Wärmeleitelements gemessene Breite des Heizungsrohrs 7 verstanden.

Aufgrund der gegenüber dem Durchmesser D des Heizungsrohrs großen Abstände A₀, A₁ des Heizungsrohrabschnitts zu mindestens einen Seitenrand des Wärmeleitelements 5 beziehungsweise der beiden geraden Heizungsrohrabschnitte 7A, 7B voneinander, kann bei Bedarf auch eine große Wärmemenge, die zunächst von dem das Heizungsrohr 7 durchströmenden Wärmeträgermediums an das Heizungsrohr 7 und von diesem zum Wärmeleitelement überführt wird, zu dem zu beheizenden Bauteil, mindestens eine Wand, die Decke und/oder der Boden, transportiert werden. Der Wärmetransport vom Heizungsrohr 7 an das Wärmeleitelement 5 ist insbesondere deshalb so wirksam, weil die von den beiden geraden Heizungsrohrabschnitten 7A, 7B sich ausbreitende Wärme nicht aufstaut und besonders wirksam den den jeweiligen Heizungsrohrabschnitt umgebenden Bereich des Wärmeleitelements 5 aufwärmen kann.

Figur 3 zeigt einen Teil einer Haltevorrichtung 23 für das Heizelement 3 in perspektivischer Darstellung, nämlich eine C-förmige Profilschiene 25, die eine durch die C-Form gebildete, sich in Längsrichtung der Profilschiene 25 erstreckende Ausnehmung 27 aufweist, in die mindestens ein Federelement, vorzugsweise drei Federelemente eingebracht beziehungsweise eingedreht und dadurch an der Profilschiene 25 gehalten sind. Von den Federelementen ist in Figur 3 lediglich das Federelement 29 dargestellt, das bei diesem Ausführungsbeispiel von einer Druckfeder 31 gebildet ist.

Figur 4 zeigt in Explosionsdarstellung weitere Teile der Haltevorrichtung 23, nämlich ein Befestigungswinkel 33, der -wie mit einem Pfeil 35 angedeutet- mit einem ersten Schenkel 37 in die Profilschiene 25 der Halteeinrichtung 23 einsteckbar und darin verschieblich geführt ist. An dem zweiten Schenkel 39 des Befestigungswinkels 33 sind Durchgangsöffnungen 41 eingebracht, durch die Befestigungsmittel, beispielsweise Schrauben, hindurchgesteckt und zur Fixierung des Befestigungswinkels 33 und somit der Profilschiene 25 in ein in Figur 4 nicht dargestelltes Bauteil, beispielsweise in einen Ständer einer Ständerhohlwand, eingeschraubt werden. Am ersten Schenkel 37 des Befestigungswinkels 33 wird ein Halteklip 43 mittels einer in eine Gewindebohrung 44 einer Gewindeplatte 45 eingedrehten Schraube 47 gehalten. Diese durchgreift dazu eine Bohrung 48 einer Unterlegscheibe 50, die der Auflage des Kopfes der Schraube 47 dient, eine Bohrung 49 im Halteklip 43 und ein sich zumindest im wesentlichen in Längsrichtung des ersten Schenkels 37 beziehungsweise der Profilschiene 25 erstreckendes Langloch 51 im ersten Schenkel 37 des Befestigungswinkels 33. Dann wird die Schraube 47 in die Gewindebohrung 44 der Gewindeplatte 45 eingedreht. Durch das Langloch 51 ist der Abstand zwischen dem Bauteil, an dem der Befestigungswinkel 33 angebracht ist, und dem Halteklip 43 einstellbar, worauf im folgenden anhand der Figur 5 näher eingegangen wird.

Der Halteklip 43 weist einen Schenkel 53 auf, der im montierten Zustand des Halteklips 43 im wesentlichen senkrecht zu der Seite der Profilschiene 25 steht, auf der sich die Ausnehmung 27 befindet. Das freie Ende 55 des Schenkels 53 ist derart abgewinkelt, daß ein hakenförmiger Abschnitt 56 gebildet wird. Das gegenüber dem Schenkel 53 schräg abstehende Ende 55 beziehungsweise der Abschnitt 56 wird bei der Montage des Heizelements 3 von einem Ende 21 des Wärmeleitelements 5 hintergriffen und bildet zusammen mit diesem ein Rastmittel.

Figur 5 zeigt die Haltevorrichtung 23 in zusammen- und eingebautem Zustand. An jedem der beiden Enden der Profilschiene 25 ist jeweils ein Befestigungswinkel 33 eingesteckt, die jeweils an einem teilweise dargestellten Ständer 57 einer Ständerhohlwand befestigt sind. An jedem der beiden Befestigungswinkel 33 ist jeweils ein Halteklip 43 für das in Figur 5 nicht dargestellte Heizelement 3 angebracht. Dadurch wird das Heizelement 3 an zwei Seiten, bei dem in Figur 1 dargestellten Ausführungsbeispiel des Heizelements 3 an den Längsseiten an der an den Ständern 57 befestigten Halteeinrichtung 23 gehalten. In die Ausnehmung 27 der Profilschiene 25 sind bei diesem Ausführungsbeispiel drei in einem Abstand voneinander angeordnete Federelemente 29, hier Druckfedern 31, eingedreht. Selbstverständlich können auch mehr als drei Federelemente oder weniger, beispielsweise nur ein oder zwei Federelemente vorgesehen sein. Deren Anzahl ist also variierbar.

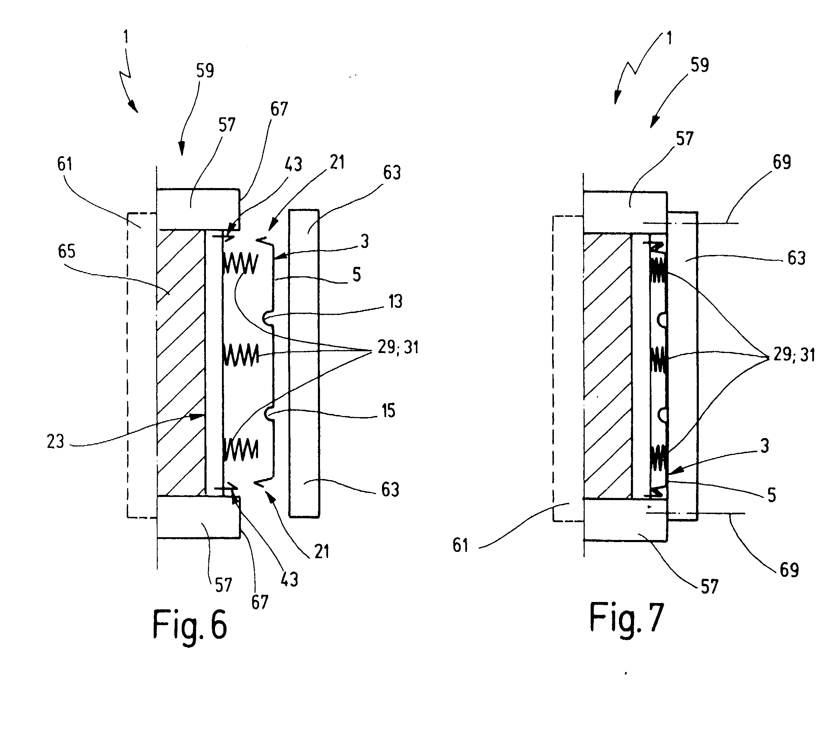

Figur 6 zeigt eine Draufsicht auf eine in Längsrichtung geschnittene Ständerhohlwand 59, von der in Figur 6 lediglich zwei in einem Abstand voneinander angeordnete Ständer 57 dargestellt sind. Die Ständerhohlwand 59 dient beispielsweise zum Abtrennen beziehungsweise Teilen eines Raumes/Zimmers. An den Ständern 57 ist eine mit gestrichelter Linie dargestellte erste Teilwand 61, die beispielsweise von einer Rigipsplatte gebildet ist, mit nicht dargestellten Befestigungsmitteln gehalten. Zwischen den Ständern 57 ist die anhand der Figuren 3 bis 5 beschriebene Haltevorrichtung 23 für das Heizelement 3 derart montiert, daß die an beiden Enden der Profilschiene 25 angebrachten Halteklips 43 einer zu beheizenden, beispielsweise aus Rigips bestehenden zweiten Teilwand 63 der Ständerhohlwand 59 zugewandt sind.

Wie aus Figur 6 ersichtlich, ragen die noch unbelasteten, in der Profilschiene 25 gehaltenen Federelemente 29 über die Seitenfläche 67 der Ständer 57 hinaus, an der die zu beheizende zweite Teilwand 63 befestigt wird.

In dem Zwischenraum zwischen der ersten Teilwand 61 und der Haltevorrichtung 23 ist eine Isolierung 65 eingebracht, wodurch sichergestellt wird, das nur ein gewünschter Abschnitt der Ständerhohlwand 59, hier also die zweite Teilwand 63, mittels des Heizelements 3 erwärmt wird.

Um das Heizelement 3, dessen anhand von Figur 1 beschriebenes Heizungsrohr 7 in den Figuren 6 und 7 nicht dargestellt ist, an der Haltevorrichtung 23 zu befestigen, wird dieses lediglich zwischen die Ständer 57 der Ständerhohlwand 59 entgegen der Federkraft der Federelemente 29 gedrückt, bis die schrägstehenden Enden 21 in den Randbereichen 17, 19 des Wärmeleitelements 5 das schrägstehende Ende 55 beziehungsweise den hakenförmigen Abschnitt 56 der Halteklips 43 hintergreifen. Durch die durch das Zusammendrücken der Federelemente erzeugte elastische Kraft wird das Heizelement 3 in Richtung der zu beheizenden zweiten Teilwand 63 gedrückt. Dadurch wird zunächst einmal ein Lösen der das Heizelement 3 haltenden Rastmittel, also jeweils ein schrägstehendes Ende 21 des Wärmeleitelements 5 und ein Halteklip 43, verhindert und vorzugsweise auch das Gewicht des Heizelements 3 gehalten. Die sich an der Profilschiene 25 der Haltevorrichtung 23 abstützenden Federelemente 29 drücken das Heizelement 3 dabei so weit in Richtung des zu beheizenden Raumes, also in der Darstellung gemäß Figur 6 nach rechts, daß das bereits montierte Heizelement 3 die Seitenflächen 67 der Ständer 57 überragt.

Vor der Montage der zweiten Teilwand 63 wird das Heizungsrohr 7 des Heizelements 3 mit dem Rohrnetz für das Wärmeträgermedium, hier Wasser, verbunden, beispielsweise mittels einer Schraub- oder Lötverbindung oder dergleichen. Nun wird die zweite Teilwand 63 der Ständerhohlwand 59 in Kontakt mit dem elastisch gelagerten Heizelement 3 gebracht und dieses entgegen der Federkraft der Federelemente 29 in Richtung der ersten Teilwand 61 in den Zwischenraum zwischen den Ständern 57 gedrückt. Dabei wird das Heizelement 3 in die in Figur 7, die eine Draufsicht auf die zumindest abschnittsweise fertig montierte Ständerhohlwand 59 zeigt, dargestellte Lage verlagert. Die zweite Teilwand 63 wird mittels lediglich angedeuteter Befestigungsmittel 69 an den Ständer 57 befestigt.

Wie aus Figur 7 ersichtlich, liegt das Heizelement 3, das heißt dessen Wärmeleitelement 5 flächig an der zweiten Teilwand 63 der Ständerhohlwand 59 an, wodurch die Wärmeenergie vom in den Figuren 6 und 7 nicht dargestellten Heizungsrohr 7 verlustarm über das Wärmeleitelement 5 an die zweite Teilwand 63 übertragen wird. Dadurch, daß das Heizelement 3 mittels der Federelemente 29 mit definierter elastischer Kraft gegen die zweite Teilwand 63 gedrückt wird, können Wärmeausdehnungen des Heizelements 3 in vorteilhafter Weise ausgeglichen werden. Es ist daher möglich, die Heizungsanlage mit einer relativ hohen Vorlauftemperatur zu betreiben, wodurch sich eine hohe spezifische Heizleistung ergibt, ohne daß durch die Wärmeausdehnung des Heizelements 3 erzeugten Risse in der beheizten Teilwand 63 auftreten.

Das anhand der Figuren 1, 2, 6 und 7 beschriebene Heizelement 3 kann auch von mehreren, beispielsweise zwei oder drei Haltevorrichtungen 23, die in dem Zwischenraum zwischen den Ständern 57 befestigt sind, gehalten werden. Deren Anzahl ist also variierbar.

Dadurch, daß die Haltevorrichtung 23 nur eine geringe Anzahl von Teilen umfaßt, die zudem noch einen einfachen Aufbau aufweisen, kann die Haltevorrichtung 23 einfach und somit kostengünstig hergestellt werden. Durch die in der Profilschiene 25 verschieblich geführten Befestigungswinkel 33 können in vorteilhafter Weise unterschiedlich große Abstände der Ständer 57 zueinander ausgeglichen werden.

Aus allem wird deutlich, daß die sich durch die elastische Anpressung beziehungsweise das elastische Andrücken des Heizelements 3 an die zu beheizende Fläche ergebenen Vorteile sich auch bei einer Fußbodenheizung einstellen. Hierbei werden die Ständer 57 beispielsweise von Dachsparren gebildet und das Heizelement 3 an eine auf diesen befestigte Bodenplatte gepreßt.

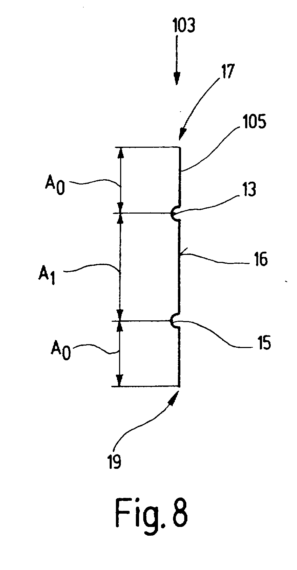

Figur 8 zeigt eine Seitenansicht eines weiteren Ausführungsbeispiels eines Heizelements 103, das sich von dem anhand der vorangegangenen Figuren beschriebenen Heizelement 3 lediglich dadurch unterscheidet, daß die Anlagefläche 16 sowie die längsseitigen Randbereiche 17 und 19 des Wärmeleitelements 105 des Heizelements 103 eben ausgebildet sind. Das heißt, die Anlagefläche 16 und die der Klemmbefestigung dienenden Wandbereiche 17, 19 liegen in einer gedachten Ebene; der Übergang zwischen der Anlagefläche 16 und den Randbereichen 17, 19 ist also stufenlos.

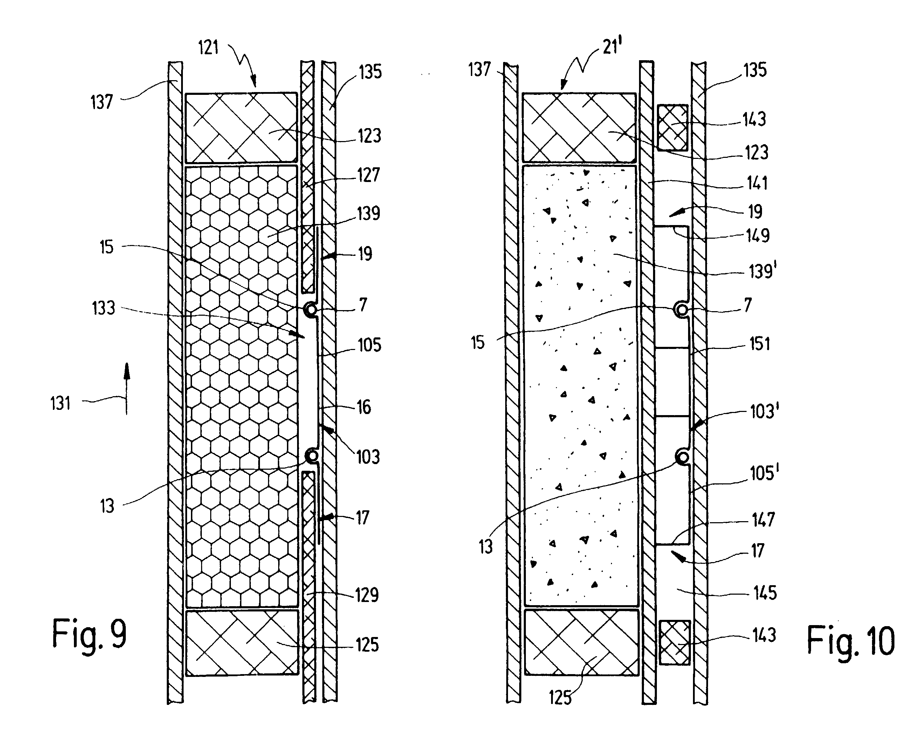

Figur 9 zeigt eine Draufsicht auf eine in Längsrichtung geschnittene Ständerhohlwand 121 in Explosionsdarstellung, von der in Figur 9 lediglich zwei in einem Abstand zueinander angeordnete Ständer 123 und 125 dargestellt sind. Die Ständerhohlwand 121 dient beispielsweise zum Abtrennen beziehungsweise Teilen eines Raumes. Auf der dem zu beheizenden Raum zugewandten Seite des Ständers 123 ist eine Deckplatte 127 und an dem Ständer 125 eine Deckplatte 129 befestigt. Die beispielsweise von jeweils einer 13 mm dicken Spanplatte V-20 gebildeten Deckplatten 127, 129 sind -in Längsrichtung (Pfeil 131) der Ständerhohlwand 121 gesehen- in einem Abstand zueinander angeordnet, wodurch ein Zwischenraum 133 gebildet ist. An den fluchtend angeordneten Deckplatten 127, 129 ist eine erste Teilwand 135 der Ständerhohlwand 121 mit geeigneten -nicht dargestellten- Befestigungsmitteln, beispielsweise Nägel oder Schrauben, befestigt. Das Heizelement 103 ist zwischen den Deckplatten 127 und 129 und der ersten Teilwand 135 klemmend gehalten, worauf im folgenden näher eingegangen wird.

Das Wärmeleitelement 105 ist gegenüber den Deckplatten 127, 129 so positioniert, daß sich die im mittleren Bereich des Wärmeleitelements 105 vorgesehenen, in einem Abstand zueinander angeordneten Sicken 13, 15 innerhalb des Zwischenraums 133 zwischen den Deckplatten 127, 129 befinden. Dabei liegt das Wärmeleitelement 105 mit seinem längsseitigen Randbereich 17 an der Deckplatte 129 und dem längsseitigen Randbereich 19 an der anderen Deckplatte 127 an. Das Wärmeleitelement 105 ist zwischen den Deckplatten 127, 129 und der ersten Teilwand 135, vorzugsweise rutschfest, eingeklemmt. Aus Figur 9 ist noch ersichtlich, daß das Wärmeleitelement 105 mit der Anlagefläche 16 an der zu beheizenden ersten Teilwand 135 flächig anliegt.

Auf der der ersten Teilwand 135 abgewandten Seite der Ständer 123, 125 der Ständerhohlwand 121 ist eine zweite Teilwand 137 gehalten, die mit nicht dargestellten Befestigungsmitteln, beispielsweise Nägel oder Schrauben, an den Ständern 123, 125 befestigt ist. In dem Zwischenraum zwischen den Teilwänden 135, 137 und den Ständern 123, 125 ist eine Isolierung 139 eingebracht. Durch die Isolierung 139 wird bei dem in Figur 9 dargestellten Ausführungsbeispiel der Ständerhohlwand 121 sichergestellt, daß nur ein gewünschter Abschnitt beziehungsweise Bereich der Ständerhohlwand 121, hier also im wesentlichen nur die erste Teilwand 137, mittels des Heizelements 103 erwärmt wird. Die Isolierung 139 dient des weiteren als Schallschutz.

Die beiden Teilwände 135, 137 werden vorzugsweise von wenigstens einer Gips-Kartonplatte beziehungsweise Gips-Faserplatte gebildet, die beispielsweise eine Dicke von 9 mm bis 13 mm aufweist.

Die anhand von Figur 9 beschriebene Ständerhohlwand 121 ist sowohl zum nachträglichen Einbau in einen bestehenden Raum, als auch aufgrund ihres Aufbaus besonders gut zur Vormontage einer bei der Fertighausherstellung eingesetzten Wand geeignet. Im folgenden wird rein beispielhaft die Montage des Heizelements 103 in einer bei der Fertighausherstellung verwendeten Ausführungsform einer Ständerhohlwand näher erläutert. Zur Befestigung des Heizelements 103 innerhalb der Ständerhohlwand 121 wird das Wärmeleitelement 105 auf die Deckplatten 127, 129 derart aufgelegt, daß die das Heizungsrohr 7 aufnehmenden Sicken 13, 15 im Wärmeleitelement 105 in den Zwischenraum 133 zwischen den fluchtend angeordneten Platten 127, 129 hineinragen. Anschließend wird die erste Teilwand 135 auf das Heizelement 103 beziehungsweise die Deckplatten 127, 129 aufgelegt und vorzugsweise vollautomatisch abgenagelt, das heißt, es werden die erste Teilwand 135 und die Deckplatten 127, 129 durchdringende Nägel in die Ständer 123, 125 der Ständerhohlwand 121 eingebracht. Dabei wird das Heizelement 103 rutschfest zwischen der ersten Teilwand 135 und den Deckplatten 127, 129 eingeklemmt. Die Klemmfestlegung zwischen diesen Elementen ermöglicht einerseits ein sicheres Halten des Heizelements 103 innerhalb der Ständerhohlwand und andererseits eine vorzugsweise geräuschlose Wärmeausdehnung des Heizelements 103 beziehungsweise des Wärmeleitelements 105 in der Länge und Breite, ohne daß es dabei zu einer Rißbildung in der ersten Teilwand 135 kommt.

Um das in der vormontierten Ständerhohlwand 121 zwischen den Deckplatten und der ersten Teilwand angebrachte Heizelement mit dem Rohrnetz für das Wärmeträgermedium, hier Wasser, der Heizungsanlage zu verbinden, sind an sich bekannte Heizungsrohr-Klemmanschlüsse vorgesehen, so daß beim Aufstellen der Ständerhohlwand gleichzeitig die Verbindung des Heizungsrohres 7 mit dem Vor- und Rücklauf der Heizungsanlage erfolgt.

Bei einem Einbau der Ständerhohlwand in einen bestehenden Raum, also bei einer Vorortmontage, ist es auch möglich, daß das Heizungsrohr 7 beispielsweise mittels einer Schraub- oder Lötverbindung oder dergleichen mit dem Rohrnetz verbunden wird.

Die Montage der Ständerhohlwand erfolgt beispielsweise derart, daß nach dem Aufstellen der Ständer zunächst die zweite Teilwand 137 befestigt und die Isolierung 139 in den Zwischenraum zwischen den Ständern eingebracht wird. Dann werden die Deckplatten 127, 129 montiert und das Heizelement 103 an die Deckplatten in der oben beschriebenen Weise angelegt sowie das Heizungsrohr 7 mit dem Rohrnetz verbunden. Schließlich wird die erste Teilwand 135 an den Deckplatten 127, 129 beziehungsweise an den Ständern 123, 125 befestigt. Dabei wird das Heizelement 103 beziehungsweise das Wärmeleitelement 105 rutschfest innerhalb der Ständerhohlwand 121 kraftschlüssig fixiert. Auf zusätzliche Befestigungsmittel und Halterungen oder dergleichen für das Heizelement 103 kann vorzugsweise verzichtet werden, so daß neben den sich daraus ergebenden wirtschaftlichen Vorteilen auch eine schnelle und einfache Montage möglich ist.

Besonders vorteilhaft bei dem anhand der Figur 9 beschriebenen Ausführungsbeispiel ist, daß dadurch, daß das Wärmeleitelement 105 flächig an der zu beheizenden Teilwand 135 anliegt, die Wärmeenergie des Wärmeträgermediums verlustarm über das Heizungsrohr 7 und das Wärmeleitelement 105 an die erste Teilwand 135 übertragen wird. Durch die Klemmbefestigung des Heizelements 103 an der Ständerhohlwand 121 kann dieses sich bei einer Temperaturänderung vorzugsweise geräuschlos ausdehnen, ohne daß Elemente der Ständerhohlwand beschädigt werden. Es ist daher möglich, die Heizungsanlage mit einer relativ hohen Vorlauftemperatur zu betreiben, wodurch sich eine hohe spezifische Heizleistung ergibt, ohne daß durch die Wärmeausdehnung des Heizelements 103 beispielsweise Risse in der beheizten Teilwand 35 erzeugt werden.

Figur 10 zeigt eine Draufsicht auf eine in Längsrichtung geschnittene weitere Ausführungsform der Ständerhohlwand in Explosionsdarstellung. Gleiche Teile sind mit gleichen Bezugszeichen versehen, so daß insofern auf die Beschreibung zu Figur 9 verwiesen wird. Im folgenden wird lediglich auf die Unterschiede näher eingegangen.

Auf der dem zu beheizenden Raum zugewandten Seite der Ständer 123, 125 der Ständerhohlwand 121' ist nur eine durchgängige, das heißt geschlossene Deckplatte 141 angebracht. Die bei einem bevorzugten Ausführungsbeispiel eine Dampfsperre aufweisende Deckplatte 141, die beispielsweise von einer 18 mm Rigipsplatte gebildet ist, und die Ständer 123, 125 sowie die zweite Teilwand 137 schließen zwischen sich einen Raum ein, in dem eine Isolierung 139', hier eine Schüttisolierung, eingebracht ist. An der Deckplatte 141 ist eine sogenannte Auflattung angebracht, von der in der Darstellung gemäß Figur 10 lediglich Konterlatten 143 dargestellt sind. An der Auflattung wird die zu beheizende erste Teilwand 135 der Ständerhohlwand 121' in geeigneter Weise angebracht. Die erste Teilwand 135, die Konterlatten 143 der Auflattung und die zweite Deckplatte 141 begrenzen einen Installationsbereich 145, in dem ein Heizelement 103' vorgesehen ist.

Das Heizelement 103' umfaßt ein Wärmeleitelement 105', in dessen mittleren Bereich Sicken 13, 15 eingebracht sind, die der Aufnahme des Heizungsrohrs 7 dienen. Die längsseitigen Randbereiche 17 und 19 des Wärmeleitelements 105' sind derart abgewickelt, daß das Wärmeleitelement 105' einen U-förmigen Querschnitt aufweist. Die Höhe der durch das Abwinkeln in den längsseitigen Randbereichen 17, 19 des Wärmeleitelements 105' gebildeten Schenkel 147 und 149 ist hier geringfügig größer als die Dicke der Konterlatten 143 der Auflattung, wodurch sichergestellt wird, daß bei der Montage der Ständerhohlwand 121' das Heizelement 103' zwischen der Deckplatte 141 und der ersten Teilwand 135 eingeklemmt wird.

Das Heizelement 103' weist gegenüber dem in Figur 9 dargestellten Heizelement 103 eine größere Breite auf. Um zu verhindern, daß das dünnwandige Wärmeleitelement 105' in seinem mittleren Bereich durchhängt beziehungsweise durchgebogen wird, ist eine Stützbrücke 151 vorgesehen. Diese kann beispielsweise aus dem gleichen Material wie das Wärmeblech 105' hergestellt werden und weist bei dem in Figur 10 dargestellten Ausführungsbeispiel einen U-förmigen Querschnitt auf. Die Höhe der Schenkel der Stützbrücke 151 entspricht im wesentlichen der der Schenkel 147, 149 des Wärmeleitelements 105'.

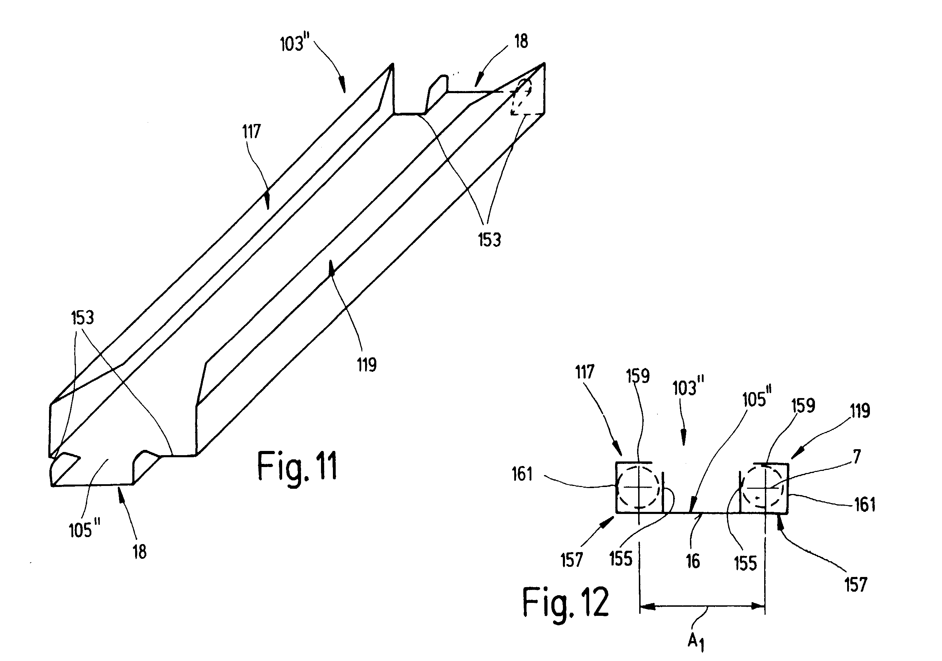

Figur 11 zeigt eine perspektivische Darstellung eines Teils eines Ausführungsbeispiels eines Heizelements 103". Dieses umfaßt ein Wärmeleitelement 105'', das zur Bildung einer rechteckförmigen Aufnahme in seinen längsseitigen Randbereichen 117 und 119 sowie seinen stirnseitigen Randbereichen 18 mehrfach abgekantet beziehungsweise umgebördelt wird, worauf im folgenden anhand von Figur 12 näher eingegangen wird.

In das in Figur 11 dargestellte Wärmeleitelement 105" sind jeweils in einem Abstand von den stirnseitigen Randbereichen 18 quer zur Längserstreckung des Wäremeleitblechs verlaufende Einschnitte 153 eingebracht. Die Ecken in den stirnseitigen Randbereichen 18 werden durch Abkanten derart abgewinkelt, daß sie nach dem Abkanten der längsseitigen Randbereiche 18 entlang der Einschnitte 153 jeweils eine erste Seite 155 einer Aufnahme 157 für das in Figur 11 nicht dargestellte Heizungsrohrs 7 dienen. Die längsseitigen Randbereiche 117, 119 werden derart abgewinkelt, daß sie, wie aus Figur 12 ersichtlich, jeweils eine Oberseite 159 und eine weitere, zweite Seite 161 der Aufnahme 157 bilden. Jeweils ein Teilbereich der Anlagefläche 16, mit der das Wärmeleitelement 105" vorzugsweise an einer zu beheizenden Teilwand anliegt, bildet die Unterseite für die Aufnahmen 157.

Figur 12 zeigt einen Querschnitt durch das Wärmeleitelement 105" gemäß Figur 11. Dieses ist -wie anhand von Figur 11 beschrieben- derart in seinen längsseitigen und stirnseitigen Randbereichen 117, 119 beziehungsweise 18 abgewinkelt, daß jeweils zwei Aufnahmen 157 im Bereich der Stirnseiten des Wärmeleitelements für das mit gestrichelter Linie dargestellte Heizungsrohr 7 gebildet werden.

Aus Figur 12 ist ersichtlich, daß die bei diesem Ausführungsbeispiel rechteckförmigen Aufnahmen 157 also nur durch Abkanten des Wärmeleitelements 105" gebildet werden. Die Innenmaße der Aufnahmen 157 können so gewählt werden, daß das Heizungsrohr 7 entweder klemmend gehalten wird oder innerhalb der Aufnahmen 157 verschieblich ist. Das Abkanten des Wärmeleitelements 105" stellt also eine vorteilhafte Alternative zur Einbringung von das Heizungsrohr aufnehmenden Sicken in das Wärmeleitelement dar.

Das anhand der Figuren 11 und 12 beschriebene Heizelement 103" kann im Zusammenhang mit einer anhand der Figuren 9 und 10 beschriebenen Ständerhohlwand eingesetzt werden.

Aus allem wird deutlich, daß die sich durch die klemmende Fixierung des Heizelements 103 beziehungsweise des Wärmeleitelements 105 zwischen zwei Elementen ergebenden Vorteile sich auch bei einer Fußbodenheizung einstellen. Hierbei werden die Ständer, zwischen denen das Heizelement angeordnet ist, beispielsweise von Dachsparren gebildet und das Heizelement 103 zwischen einer Bodenplatte und mindestens einem zweiten Element eingeklemmmt.

Die anhand der Figuren 11 und 12 beschriebenen Aufnahmen 157 dienen zur Aufnahme gerader Heizungsrohrabschnitte, die in Figur 12 mit gestrichelter Linie dargestellt sind. Der Abstand zwischen den beiden Heizungsrohrabschnitten ist mit A₁ angegeben. Bezüglich der Angaben des Abstandes A₁ wird auf die Beschreibung der vorangegangenen Figuren, die Beschreibungseinleitung sowie die Ansprüche verwiesen. Aufgrund der Ausgestaltung des in den Figuren 11 und 12 dargestellten Ausführungsbeispiels des Wärmeleitelements 105" weisen die geraden Heizungsrohrabschnitte praktisch keinen Abstand zu dem jeweiligen Seitenrand (zweite Seite 161) des Wärmeleitelements auf. Das Verhältnis zwischen dem Durchmesser D des Heizungsrohrs 7 und dem Abstand A₁ beträgt hier circa 1:3.

Zusammenfassend bleibt festzuhalten, daß durch das klemmende Halten des Heizelements zwischen zwei Elementen praktisch beliebige Vorlauftemperaturen der Heizungsanlage realsierbar sind, ohne daß Elemente der Ständerhohlwand beschädigt werden. Ein Heizelement, bei dem das Heizungsrohr wie anhand der Figuren 9 bis 12 beschrieben angebracht ist, ist einfach und schnell montierbar. Selbstverständlich ist es alternativ auch möglich, das Heizungsrohr mit Hilfe zusätzlicher Halterungen an dem Wärmeleitelement des Heizelements anzubringen. Hierdurch kann die Herstellung des Wärmeleitelements vereinfacht werden. Die Grundform des Wärmeleitelements beziehungsweise die der Anlagefläche 16 ist praktisch beliebig variierbar und kann an die örtlichen Gegebenheiten angepaßt werden.

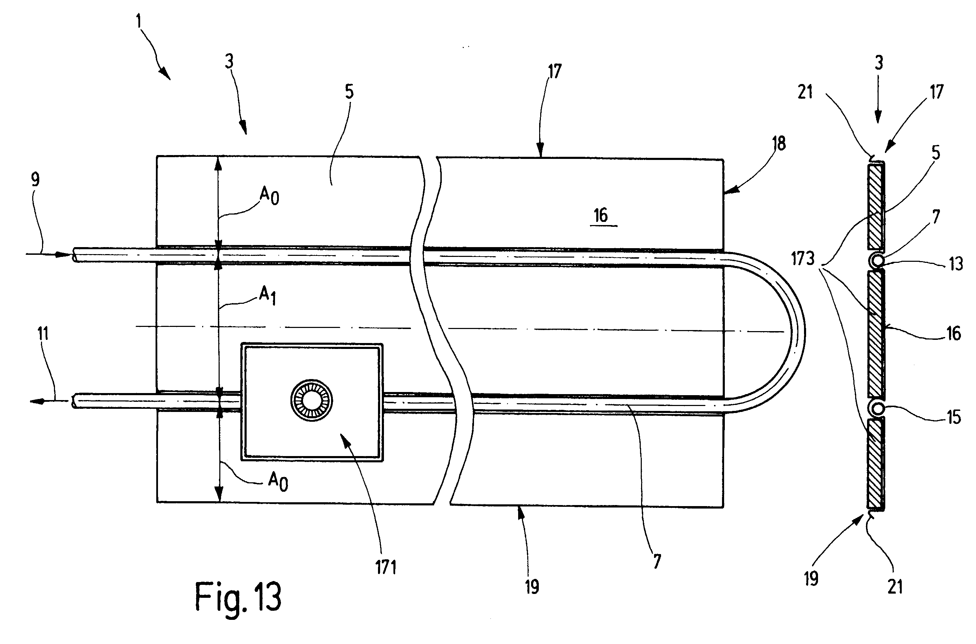

Figur 13 zeigt eine Draufsicht und eine Seitenansicht eines weiteren Ausführungsbeispiels des Heizelements 3. Gleiche Teile sind mit gleichen Bezugszeichen versehen, so daß insofern auf die Beschreibung zu den vorangegangenen Figuren verwiesen wird. In den am Wärmeleitelement 5 angebrachten Abschnitt des Heizungsrohrs 7 ist ein Thermostatventil 171 integriert, dessen Aufbau und Funktion bekannt sind, so daß hier nicht näher darauf eingegangen wird. Das Thermostatventil 171 ist im eingebauten Zustand des Heizelements 3 von dem aus zu beheizenden Raum aus bedienbar. Das Thermostatventil 171 kann über die zu beheizende Teilwand der Ständerhohlwand hinausragen oder in diese integriert sein. Nach einer Ausführungsvariante ist vorgesehen, daß jedes der einem zu beheizenden Raum zugeordneten Heizelemente ein Thermostatventil aufweist.

Auf der dem zu beheizenden Raum abgewandten Seite des Heizelements 3 sind mehrere, hier insgesamt drei Dämmplatten 173 vorgesehen, die mit dem Heizelement 3 beziehungsweise dem Wärmeleitelement 5 zu einer Einheit verbindbar sind und zwar vor der Montage des Heizelements. Die Dämmplatten 173 sind hier klemmend in den Zwischenräumen zwischen dem Randbereich 21 und der Sicke 13, der Sicke 13 und der Sicke 15 beziehungsweise der Sicke 15 und dem Randbereich 21 des Wärmeleitelements 5 gehalten. Durch die Dämmplatten 173 wird die Steifigkeit des relativ dünnen Wärmeleitelements 5 erhöht, wodurch die Handhabbarkeit des Heizelements 3 deutlich verbessert wird und somit dessen Montage vereinfacht ist.

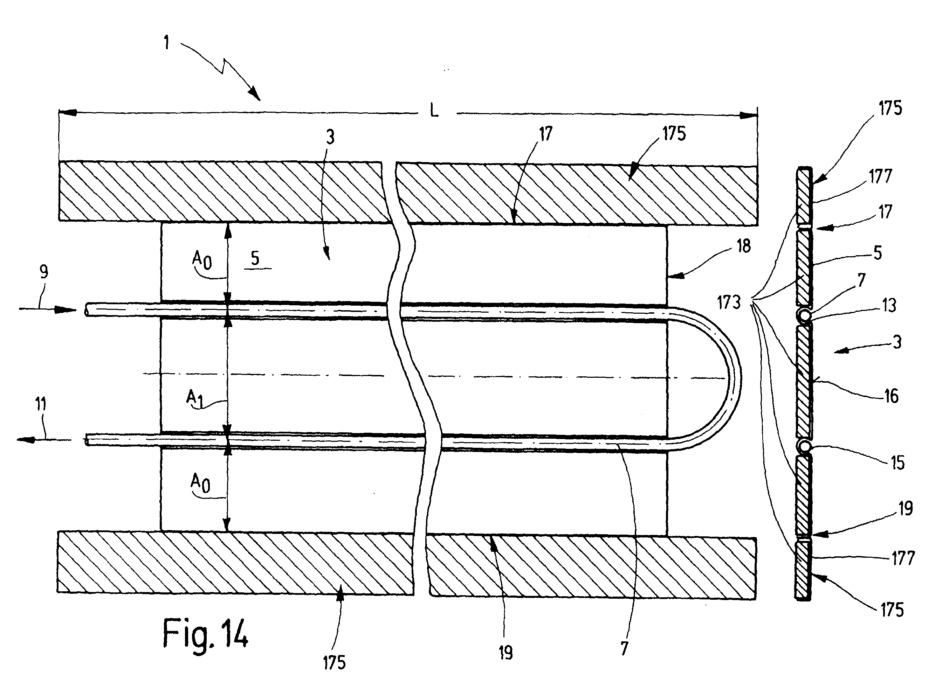

Figur 14 zeigt eine Draufsicht und eine Seitenansicht eines weiteren Ausführungsbeispiels des Heizelements 3, das sich von dem anhand der Figur 13 beschriebenen Heizelement 3 insbesondere dadurch unterscheidet, daß an den längsseitigen Randbereichen 17 und 19 des Wärmeleitelements 5 jeweils eine Montageleiste 175 befestigt sind, die jeweils einen Ständer der Ständerhohlwand bilden. Bei dem in Figur 14 dargestellten Ausführungsbeispiel bestehen die Montageleisten 175 aus einer zum Beispiel aus Metall bestehenden Leiste 177, die im Querschnitt gesehen ein U-förmiges Profil aufweist, in das eine Dämmplatte 173 eingeklemmt ist. Wie aus Figur 14 ersichtlich sind die Montageleisten 175 in die hakenförmigen Enden 21 des Wärmeleitelements 5 eingehängt. Die Montageleisten 175, die vor der Montage des Heizelements mit dessen Wärmeleitelement zu einer Einheit verbunden werden können, ermöglichen eine einfache und schnelle Montage des Heizungselements 3 vor Ort.

Bei einem bevorzugten Ausführungsbeispiel ist die Länge L der Montageleisten 175 im wesentlichen gleich groß wie die Höhe der Teilwand, der das Heizelement zugeordnet ist. Bei Betrachtung der Figur 14 wird deutlich, daß die Länge des Wärmeleitelements 5 kleiner ist, zum Beispiel 50 mm bis 400 mm kleiner ist, als die der Montageleisten 175. Die Länge des mit dem Wärmeleitbleich 5 verbundenen Heizungsrohrs 7 ist vorzugsweise nur geringfügig kleiner als die Höhe der Teilwand, die mit Hilfe des Heizelements 3 erwärmt werden soll.

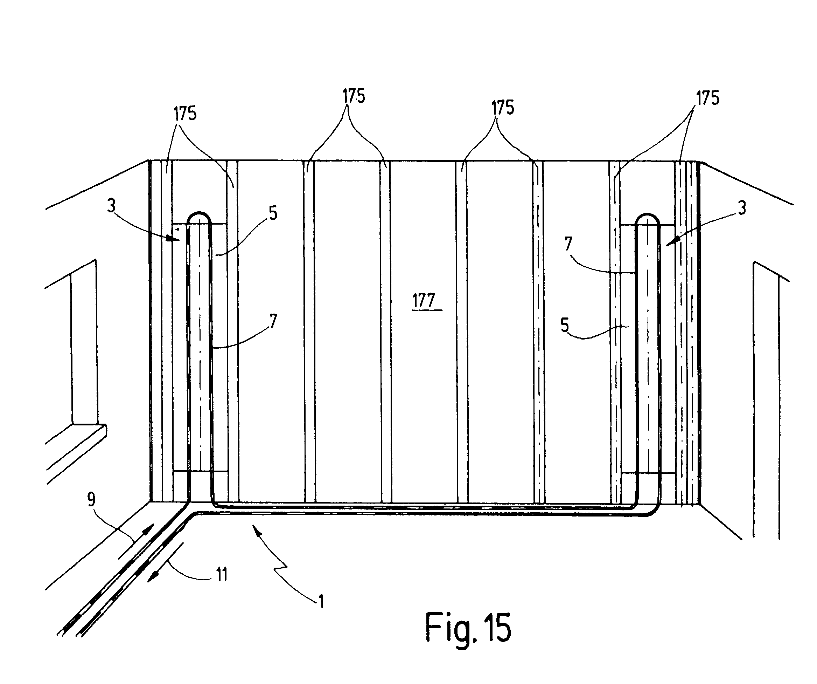

Figur 15 zeigt einen Ausschnitt eines Raumes in perspektifischer Darstellung. An einer Massivwand 177, also einer zum Beispiel aus Beton gegossener oder aus Steinen gemauerten Wand, soll eine Ständerhohlwand aufgebaut werden. Hierzu sind eine Anzahl in einem Abstand voneinander angeordnete Montageleisten 175 an der Massivwand 177 befestigt. An den jeweils äußeren beiden Montageleisten 175 ist jeweils ein anhand der Figur 14 beschriebenes Heizelement 3 angebracht. Die beiden Heizelemente 3 sind mit dem Rohrnetz einer nicht näher dargestellten Heizungsanlage 1 verbunden. Wie aus Figur 15 ersichtlich, ist der Rücklauf des Heizungsrohrs 7 des einen Heizelements 3 mit dem Vorlauf des Heizungsrohrs 7 des anderen Heizelements 3 verbunden. Die Heizelemente 3 sind bei diesem Ausführungsbeispiel also in Reihe verbunden.

An den Montageleisten 175 wird die nicht dargestellte, zu beheizende Teilwand, die beispielsweise durch Gipskartonplatten gebildet ist, in entsprechender Weise befestigt. Wichtig ist, daß die Heizelemente 3 so zwischen den Montageleisten 175 angeordnet sind, daß das jeweilige Wärmeleitelement 5 flächig an der zu beheizenden Teilwand anliegt.

Die die Ständer der Ständerhohlwand bildenden Montageleisten 175 können wie die anhand der Figur 14 beschriebene Montageleisten 175 ausgebildet sein. Es ist auch möglich, aus Holz und/oder Metall bestehende Montageleisten einzusetzen.

Allen anhand der Figuren beschriebenen Ausführungsbeispielen des Heizelements ist gemeinsam, daß dieses mindestens einer Wand, der Decke und/oder dem Boden des zu beheizenden Raumes zugeordnet, insbesondere innerhalb der Wand/der Decke/dem Fußboden angeordnet ist. Das Heizelement kann in einem Hohlraum der Wand/der Decke/des Bodens angeordnet sein, so daß bei einer durch eine Temperaturänderung bedingte Veränderung der Größe des Wärmeelements es nicht zu das Bauteil beschädigende Spannungen kommt. Selbstverständlich ergeben sich die Vorteile des erfindungsgemäßen Heizelements auch dann, wenn dieses, insbesondere das Wärmeleitelement, in der mindestens einen Wand, der Decke und/oder dem Boden des Raumes teilweise oder vollständig eingegossen, eingemauert oder auf andere geeignete Weise integriert ist. Das Heizelement kann also derart ausgebildet sein, daß es im eingebauten Zustand zum Beispiel jeweils einen Teilbereich von zwei Wänden beheizen kann; es kann also in einem Eckbereich, insbesondere in der Ecke, des Raumes angeordnet werden.

Der Gegenstand der Erfindung ist nicht nur auf eine Heizungsanlage begrenzt, sondern schließt auch ein einzelnes Heizelement mit ein.

Um einen gewünschten Wärmetransport von dem mindestens einen wärmeleitend mit dem Wärmeleitelement verbundenen Heizungsrohrabschnitt auch dann realisieren können, wenn zwei Heizelemente in einem Abstand voneinander angeordnet sind, ist darauf zu achten, daß der Abstand zwischen den benachbart angeordneten Heizungsrohrabschnitten der dem jeweiligen Heizelement zugeordneten Heizungsrohre wesentlich größer ist als der Durchmesser des jeweiligen Heizungsrohrsabschnitts. Der Abstand zwischen zwei Heizungsrohrabschnitten zweier Heizungsrohre weist vorzugsweise auch die für die Abstände A₀ und A₁ angegebenen Werte auf. Selbstverständlich sind hierbei auch größere Abstände realisierbar, so daß die Wertangaben zu den Abständen A₀ und A₁ als Minimalwerte anzusehen sind.

Um eine hohe Wärmeleistung erzielen zu können ist es auch hier besonders wichtig, daß ein ungehinderter Wärmetransport von einem Heizungsrohrabschnitt zum Wärmeleitelement möglich und eine Beeinflussung dieses Vorgangs durch ein benachbart angeordnetes Heizungsrohr oder -abschnitt ausgeschlossen ist.

## Patentansprüche

1. Heizungsanlage mit mindestens einem Heizelement zur Raumheizung, das in mindestens einer Wand, in der Decke und/oder im Boden des Raumes angeordnet ist, **dadurch gekennzeichnet**, daß das Heizelement (3,103,103',103'') ein von einem Wärmeträgermedium durchströmbares Heizungsrohr (7) und ein tafelförmiges Wärmeleitelement (5,105,105',105") umfaßt und daß das Heizungsrohr (7) wärmeleitend mit dem Wärmeleitelement verbunden ist.

2. Heizungsanlage nach Anspruch 1, **dadurch gekennzeichnet,** daß der Abstand (A₀) zwischen einem am Wärmeleitelement (5,105,105',105'') anliegenden ersten Heizungsrohrabschnitt (7A) und mindestens einem Seitenrand des Wärmeleitelements (5,105,105', 105'') und/oder der Abstand (A₁) zwischen dem ersten Heizungsrohrabschnitt (7A) und einem am Wärmeleitelement anliegenden zweiten Heizungsrohrabschnitt (7B) wesentlich größer als der Durchmesser (D) des Heizungsrohrabschnitts (7A;7B) sind/ist.

3. Heizungsanlage nach einem der vorhergehenden Ansprüche, **dadurch gekennzeichnet,** daß mindestens zwei in einem Abstand voneinander angeordnete Heizelemente vorgesehen sind, die jeweils mit einem Heizungsrohr (7) wärmeleitend verbunden sind, und daß der Abstand zwischen den benachbart angeordneten Heizungsrohrabschnitten der Heizungsrohre (7) wesentlich größer als der Durchmesser (D) der Heizungsrohrabschnitte ist.

4. Heizungsanlage nach einem der vorhergehenden Ansprüche, **dadurch gekennzeichnet,** daß der Abstand (A₁) zwischen dem ersten und zweiten Heizungsrohrabschnitt (7A,7B) des Heizelements und/oder der Abstand (A₁) zwischen den nebeneinander angeordneten Heizungsrohrabschnitten zweier Heizelemente in einem Bereich von 30 mm bis 600 mm, vorzugsweise von 100 mm bis 400 mm, insbesondere von 150 mm bis 250 mm, liegen/liegt.

5. Heizungsanlage nach einem der vorhergehenden Ansprüche, **dadurch gekennzeichnet,** daß der Abstand (A₀) zwischen einem Heizungsrohrabschnitt (7A;7B) und mindestens einem Seitenrand des Wärmeleitelements in einem Bereich von 20 mm bis 300 mm, vorzugsweise von 40 mm bis 150 mm, insbesondere von 80 mm bis 120 mm, liegt.

6. Heizungsanlage nach einem der vorhergehenden Ansprüche, **dadurch gekennzeichnet**, daß der Abstand A₁ im wesentlichen doppelt so groß als der Abstand A₀ ist.

7. Heizungsanlage nach einem der vorhergehenden Ansprüche, **dadurch gekennzeichnet**, daß das Verhältnis zwischen dem Durchmesser (D) des Heizungsrohrs (7) und dem Abstand (A₀) des Heizungsrohrabschnitts (7A;7B) zu einem Seitenrand des Wärmeleitelements (5,105,105',105'') in einem Bereich von 1:2 bis 1:30, vorzugsweise von 1:4 bis 1:13, insbesondere von 1:6 bis 1:10, liegt.

8. Heizungsanlage nach einem der vorhergehenden Ansprüche, **dadurch gekennzeichnet,** daß das Verhältnis zwischen dem Durchmesser (D) des Heizungsrohrs (7) und dem Abstand (A₁) zweier Heizungsrohrabschnitte (7A;7B) in einem Bereich von 1:3 bis 1:50, vorzugsweise von 1:8 bis 1:33, insbesondere von 1:13 bis 1:20, liegt.

9. Heizungsanlage nach einem der vorhergehenden Ansprüche, **dadurch gekennzeichnet**, daß das Heizungsrohr (7) mindestens einen Bogen aufweist oder als Heizrohrschlange ausgebildet ist.

10. Heizungsanlage nach einem der vorhergehenden Ansprüche, **dadurch gekennzeichnet,** daß das -vorzugsweise rechteckförmige- Wärmeleitelement (5,105, 105',105'') das Heizungsrohr (7) beziehungsweise die Heizrohrschlange zumindest im wesentlichen abdeckt.

11. Heizungsanlage nach einem der vorhergehenden Ansprüche, **dadurch gekennzeichnet,** daß das innerhalb der Wand, der Decke und/oder dem Boden angeordnete Heizelement (3,103,103',103'') federnd an die dem Raum abgewandte Seite der Wand, der Decke und/oder dem Boden angedrückt ist.

12. Heizungsanlage nach einem der vorhergehenden Ansprüche 1 bis 10, **dadurch gekennzeichnet**, daß das Heizelement (3,103,103',103'') in mindestens eine Wand, die Decke und/oder den Boden eingegossen ist.

13. Heizungsanlage nach einem der vorhergehenden Ansprüche, **dadurch gekennzeichnet**, daß das Heizelement (3,103,103',103'') ein Strahlungswärmeheizelement ist.

14. Heizungsanlage nach einem der vorhergehenden Ansprüche, **dadurch gekennzeichnet,** daß mindestens zwei in einem Abstand voneinander angeordnete Heizelemente vorgesehen sind, wobei der Abstand zwischen den Heizelementen so groß gewählt ist, das sich die von dem jeweiligen Heizelement erwärmten Wand-, Decken- und/oder Bodenflächen vorzugsweise nicht oder nur zu einem geringen Teil überschneiden.

15. Heizungsanlage nach einem der vorhergehenden Ansprüche, **dadurch gekennzeichnet**, daß die Größe und/oder die Anordnung des mindestens einen Heizelements innerhalb der Wand, der Decke und/oder des Bodens so gewählt ist, daß eine maximale oder im wesentlichen maximale Leistungsabgabe des Heizelements realisierbar ist.

16. Heizungsanlage nach einem der vorhergehenden Ansprüche, **dadurch gekennzeichnet,** daß die mit dem Heizelement erwärmbare Wand-, Decken- und/oder Bodenfläche größer, insbesondere wesentlich größer, ist als die wärmeleitend mit der Wand-/Decken- und/oder Bodenfläche verbundene Fläche des Wärmeleitelements.
